# EUROPEAN PATENT SPECIFICATION

(11) **EP 4 429 343 B1**
(45) Date of publication and mention of the grant of the patent: **28.10.2026**
(21) Application number: 21962988.8
(22) Date of filing: 05.11.2021
(51) Int. Cl.: H04B 7/185, H04W 64/00

(54) **INTERACTION BETWEEN TERMINAL AND CORE NETWORK**
INTERAKTION ZWISCHEN ENDGERÄT UND KERNNETZWERK
INTERACTION ENTRE UN TERMINAL ET UN RÉSEAU CENTRAL

(43) Date of publication of application: 11.09.2024
(73) Proprietor: Beijing Xiaomi Mobile Software Co., Ltd., Beijing 100085 (CN)
(72) Inventor: LI, Xiaolong, Beijing 100085 (CN)
(74) Representative: Dehns Germany Partnerschaft mbB
(86) International application number: PCT/CN2021/129145
(87) International publication number: WO 2023/077475

(56) References cited:
- WO-A1-2021/162609
- CN-A- 113 597 814
- US-A1- 2020 107 237
- NOKIA ET AL: "On aspects of discontinuous coverage in IoT NTN", vol. RAN WG2, no. Electronic; 20211101 - 20211112, 22 October 2021 (2021-10-22), XP052067149, Retrieved from the Internet <URL:https://ftp.3gpp.org/tsg_ran/WG2_RL2/TSGR2_116-e/Docs/R2-2110705.zip R2-2110705 On aspects of discontinuous coverage in IoT NTN.docx> [retrieved on 20211022]
- APPLE: "Support of discontinuous coverage", vol. RAN WG2, no. e-Meeting; 20211101 - 20211112, 22 October 2021 (2021-10-22), XP052066521, Retrieved from the Internet <URL:https://ftp.3gpp.org/tsg_ran/WG2_RL2/TSGR2_116-e/Docs/R2-2110071.zip R2-2110071 Support of discontinuous coverage.docx> [retrieved on 20211022]
- HUAWEI ET AL: "Discussion on system impact of discontinuous coverage in IoT NTN", vol. SA WG2, no. e-meeting; 20211018 - 20211022, 11 October 2021 (2021-10-11), XP052062496, Retrieved from the Internet <URL:https://ftp.3gpp.org/tsg_sa/WG2_Arch/TSGS2_147E_Electronic_2021-10/Docs/S2-2107622.zip S2-2107622 Discussion on system impact of discontinuous coverage in IoT NTN.docx> [retrieved on 20211011]
- ZTE CORPORATION, SANECHIPS: "Support of discontinuous coverage in IoT NTN", 3GPP DRAFT; R2-2107765, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. electronic; 20210809 - 20210827, 6 August 2021 (2021-08-06), Mobile Competence Centre ; 650, route des Lucioles ; F-06921 Sophia-Antipolis Cedex ; France , XP052034381

## Description

### TECHNICAL FIELD

The disclosure relates to the field of communication technologies, and in particular, to a method and apparatus for interaction between a terminal and a core network.

### BACKGROUND

For IoT (Internet of Things) terminals, including NB (Narrow Band) - IoT terminals and eMTC (Enhanced Machine Type Communications) terminals, in order to save power for this type of terminals, the network can configure parameters such as DRX (Discontinuous Reception), eDRX (Extended Discontinuous Reception) and PSM (Power Save Mode) to the terminals, thereby achieving the goal of power saving of the terminals.

In related technologies, the above types of terminals can access NTNs (non-terrestrial networks), which can be satellite networks. For IoT NTN networks, there are discontinuous coverage scenarios, where as satellites or terminals move, the terminals sometimes have network coverage and sometimes do not have network coverage. When the terminals do not have IoT NTN coverage, they can stop behaviors such as searching for cells and monitoring paging messages, thereby saving power consumption. However, when the core network device configures eDRX/PSM for the terminal, even if the UE does not have network coverage, the terminal needs to monitor paging messages or perform tracking area updates (TAU) based on the configuration of eDRX/PSM. It can be seen that if the terminal performs according to the configuration of the core network at this time, it will increase the power consumption of the terminal. Therefore, how to achieve the goal of power saving of the terminals while ensuring their normal behavior has become an urgent problem to be solved.

Nokia et al: 'On aspects of discontinuous coverage in IoT NTN', 3GPP DRAFT R2-2110705, 22 October 2021, XP052067149 discusses enhancements for discontinuous coverage in IoT NTN (Non-Terrestrial Networks) under 3GPP Release 17. It analyzes satellite coverage windows, highlighting variability in availability (seconds to minutes) and gaps between coverage (minutes to hours) based on constellation configurations, elevation angles, and UE locations. Apple: 'Support of discontinuous coverage', 3GPP DRAFT R2-2110071, 22 October 2021, XP052066521, focused on handling discontinuous coverage in IoT NTN, this document proposes mechanisms for UE-network coordination. It assumes UEs can reliably predict coverage gaps using location and ephemeris data. Key ideas include UE-initiated notifications to the network before losing coverage (in all RRC states), adapting the MUSIM "graceful exit" procedure for NTN, and configuring network-controlled conditions (e.g., time/location) for RRC state transitions. Huawei et al: 'Discussion on system impact of discontinuous coverage in IoT NTN'. 3GPP DRAFT S2-2107622, 11 October 2021, XP052062496, focused paper addresses core network impacts of discontinuous NTN coverage, such as unnecessary UE cell scanning, frequent detach/reattach cycles, and inaccurate DL buffering timers. It proposes CN-level optimizations, including MME utilization of satellite assistance data (e.g., ephemeris) to adjust UE reachability timers (TAU, implicit detach), refine eDRX parameters to align with coverage windows, and implement hybrid power-saving modes.

### SUMMARY

Embodiments of the present disclosure provide a method and apparatus for interaction between a terminal and a core network, which can be applied to an IoT-NTN discontinuous coverage scenario. A terminal sends discontinuous coverage information to a core network device, so that the terminal can interact with the core network device about the discontinuous coverage information, thereby making behavior of the terminal be consistent with definition of the core network device, to avoid the core network device thinking that the terminal is in an abnormal situation, and to achieve the goal of saving power for the terminal while ensuring normal behavior of the terminal. The invention is set out in the appended set of claims.

### BRIEF DESCRIPTION OF THE DRAWINGS

In order to provide a clearer explanation of the technical solutions in embodiments of the disclosure or background technology, the accompanying drawings required in the embodiments of the disclosure or background technology will be described below.
Fig. 1 is a schematic diagram of an eDRX mode.
Fig. 2 is a schematic diagram of a PSM.
Fig. 3 is a schematic diagram of a communication system provided in an embodiment of the present disclosure.
Fig. 4 is a flowchart of a method for interaction between a terminal and a core network provided in an embodiment of the present disclosure.
Fig. 5 is a flowchart of another method for interaction between a terminal and a core network provided in an embodiment of the present disclosure.
Fig. 6 is a flowchart of yet another method for interaction between a terminal and a core network provided in an embodiment of the present disclosure.
Fig. 7 is a flowchart of another method for interaction between a terminal and a core network provided in an embodiment of the present disclosure.
Fig. 8 is a flowchart of another method for interaction between a terminal and a core network provided in an embodiment of the present disclosure.
Fig. 9 is a block diagram of a communication device provided in an embodiment of the present disclosure.
Fig. 10 is a block diagram of another communication device provided in an embodiment of the present disclosure.

### DETAILED DESCRIPTION

Embodiments of the present disclosure are described in detail below, and examples of the embodiments are shown in the accompanying drawings, wherein identical or similar labels throughout represent identical or similar components or components with identical or similar functions. The embodiments described below with reference to the accompanying drawings are exemplary and intended to explain the present disclosure, but cannot be understood as limiting the present disclosure. In the description disclosed herein, unless otherwise specified, "/" represents or. For example, A/B may represent A or B; The "and/or" in this disclosure is only a description of the association relationship between related objects, indicating that there can be three types of relationships, such as A and/or B, which can represent the existence of A alone, the coexistence of A and B, and the existence of B alone.

For ease of understanding, first introduce the terms involved in this disclosure.

### 1. Discontinuous Reception (DRX)

DRX related parameters are configured by the base station (gNB) to the terminal, mainly including DRX cycle and other parameters. The terminal monitors the paging channel based on DRX parameters to determine if there is any downlink service.

### 2. Extended discontinuous reception (eDRX)

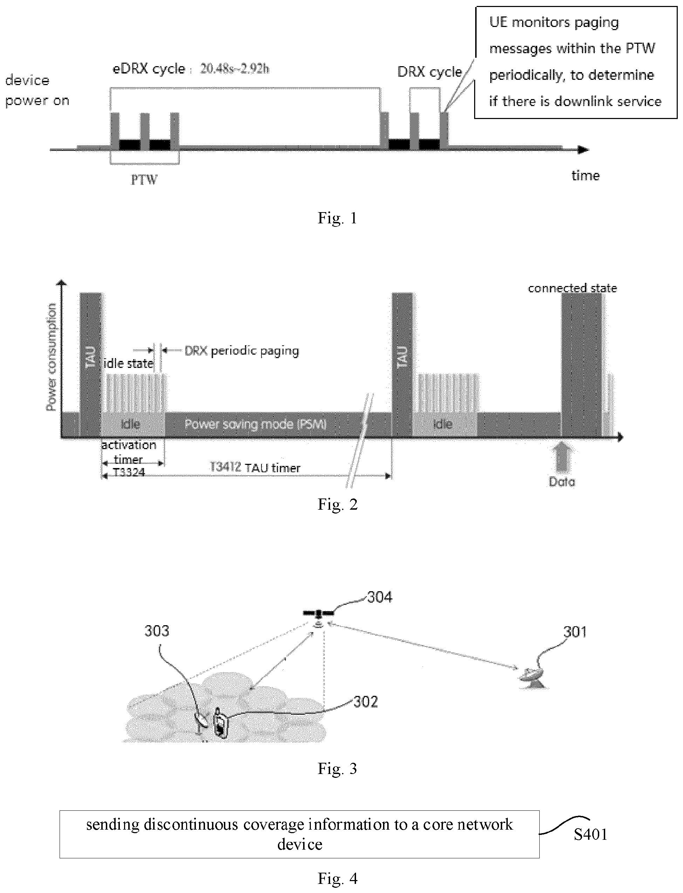

In order to further save power for the terminal, eDRX has been introduced. During each eDRX cycle, the terminal can only receive downlink data within the set paging time window (PTW), while remaining in a sleep state and not receiving downlink data for the rest time. During each eDRX cycle, there is a paging time window (PTW), during which the terminal monitors the paging channel according to the DRX cycle (the DRX cycle time is short, which can be considered as the terminal not sleeping and always reachable) in order to receive downlink data, while the terminal remains in the sleep time for the rest of the time. As shown in Fig. 1, there are two important parameters for eDRX, one is the eDRX cycle length and the other is PTW. The core network device configures eDRX parameters to the terminal during the attach process and TAU (tracking area updates) process of the terminal. In addition, the core network device can also send the parameters to gNB through S1's paging message, that is, when the core network device pages the terminal, it will also send the eDRX parameters to gNB.

### 3. Power save mode (PSM) features

In order to further save power, PSM (power saving mode) has been introduced. In PSM mode, downlink data is unreachable and the terminal is in the sleep state. There are two ways for waking up the terminal: the first is when uplink data needs to be sent, and the second is when the TAU timer times out. After entering the PSM mode, the terminal no longer receives paging messages and downlink data. As shown in Fig. 2, T3412 is the TAU timer, and T3324 is the activation timer. DRX is the time for periodic paging, and it also supports periodic paging when idle. The values of the T3324 and T3412 timers are configured by the core network device to the terminal. Usually, when the terminal attaches to the network and performs TAU, the core network device configures the above parameters to the terminal. For PSM, if the terminal enters the PSM state, it will not receive downlink data and will not perform any measurements on the serving and neighboring cells.

### 4. IoT (Internet of Things)-NTN (Non-terrestrial Network) features

For IoT terminals, including NB-IoT terminals and eMTC terminals, this type of terminals can access an NTN, which can be a satellite network. For IoT-NTN networks, there are discontinuous coverage scenarios, where as satellites or terminals move, terminals sometimes have network coverage and sometimes do not have network coverage. When terminals do not have IoT-NTN coverage, they can stop searching for cells, monitoring paging messages, and other behaviors, thereby saving power consumption.

However, when the core network device configures eDRX/PSM for the terminal, even if the UE does not have network coverage, the terminal needs to monitor paging messages or perform tracking area updates (TAU) based on the configuration of eDRX/PSM. It can be seen that if the terminal performs according to the core network configuration at this time, it will increase the power consumption of the terminal. Therefore, how to achieve the goal of power saving of terminals while ensuring their normal behavior has become an urgent problem to be solved.

Based on the above problem, embodiments of the present disclosure provide a method and apparatus for interaction between a terminal and a core network, which can be applied to an IoT-NTN discontinuous coverage scenario. The terminal sends discontinuous coverage information to the core network device, so that the terminal can interact with the core network device about the discontinuous coverage information, thereby making behavior of the terminal be consistent with definition of the core network device, to avoid the core network device thinking that the terminal is in an abnormal situation, and to achieve the goal of saving power for the terminal while ensuring normal behavior of the terminal.

In order to better understand the method for interaction between a terminal and a core network disclosed in embodiments of the present disclosure, the following will first describe the communication system applicable to embodiments of the present disclosure.

Please refer to Fig. 3, which is a schematic diagram of a communication system provided in an embodiment of the present disclosure. The communication system may include, but is not limited to, a core network device, a base station, a satellite, and a terminal. The number and form of devices shown in Fig. 3 are for illustrative purposes only and do not constitute limitations to the embodiments of the present disclosure. In practical applications, it may include two or more core network devices, two or more base stations, two or more terminals, and two or more base stations, where information exchange between terminals and core network devices can be forwarded through satellites and base stations. The communication system shown in Fig. 3 includes a core network device 301, a terminal 302, a base station 303, and a satellite 304 as an example. It should be noted that the technical solution of embodiments of the present disclosure can be applied to the NTN communication system. NTN is an important technology introduced by 5G, which provides wireless resources through satellites (or drones) instead of ground stations.

It should also be noted that the technical solution of embodiments of the present disclosure can be applied to various communication systems, for example, Long term evolution (LTE) systems, fifth generation (5G) mobile communication systems, 5G new radio (NR) systems, or other future new mobile communication systems. It should also be noted that the sidelink in embodiments of the present disclosure can also be referred to as a side link or a direct link.

The core network device 301 in embodiments of the present disclosure may be a 5G core network device and/or a 4G core network device. The 5G core network device may include Access and Mobility Management Function (AMF), Session Manager Function (SMF), etc. The 4G core network device may include Mobility Management Entity (MME). The system may also include CS domain core network devices. CS domain core network devices may be 2G core network devices or 3G core network devices.

Further, the CS domain core network devices may include: Mobile Switching Center (MSC) and/or Visitor Location Register (VLR). CS domain core network devices can establish interfaces with 4G core network devices to enable 4G core network devices to interact with 2G core network devices/3G core network devices, thereby enabling terminals to directly fall back from the 4G network to the 2G/3G network, which are not limited here.

The terminal 302 in embodiments of the present disclosure is an entity on the user side for receiving or transmitting signals, such as a mobile phone. Terminals may also be referred to as terminal devices, user equipment (UE), mobile stations (MS), mobile terminals (MT), etc. Terminals may include cars with communication capabilities, smart cars, mobile phones, wearable devices, tablets, computers with wireless transmission and reception capabilities, virtual reality (VR) terminals, augmented reality (AR) terminals, wireless terminals in industrial control, wireless terminals in self driving, wireless terminals in remote medical surgery, wireless terminals in smart grids, Wireless terminals in transportation safety, wireless terminals in smart city, wireless terminals in smart home, and so on. The specific technology and device form adopted by the terminal is note limited in embodiments of the present disclosure.

It can be understood that the communication system described in the embodiments of the present disclosure is intended to provide a clearer explanation of the technical solution of the embodiments of the present disclosure, and does not constitute a limitation on the technical solution provided in the embodiments of the present disclosure. It is known to those skilled in the art that with the evolution of the system architecture and the emergence of new business scenarios, the technical solution provided in the embodiments of the present disclosure is also applicable to similar technical problems.

The following provides a detailed introduction to the method and apparatus for interaction between the terminal and the core network provided in this application, in conjunction with the accompanying drawings.

Please refer to Fig. 4, which is a flowchart of a method for interaction between a terminal and a core network provided in an embodiment of the present disclosure. It should be noted that, the method for interaction between the terminal and the core network can be applied to IoT-NTN discontinuous coverage scenarios. The method for interaction between the terminal and the core network in the present embodiment can be performed by the terminal. As shown in Fig. 4, this method may include but is not limited to the following steps:
step S401, sending discontinuous coverage information to a core network device.

Optionally, when the terminal is in an IoT-NTN discontinuous coverage scenario, the terminal can interact with the core network device to send the discontinuous coverage information to the core network device. That is to say, when the terminal is in an IoT-NTN discontinuous coverage scenario, it needs to interact with the core network device for discontinuous coverage information. This can enable the core network device to understand the current network coverage situation of the terminal, such as when the UE enters non-IoT-NTN network coverage, and when the UE enters an IoT-NTN network coverage scenario from non-IoT-NTN network coverage.

With implementing the present embodiment, the terminal sends the discontinuous coverage information to the core network device, so that the terminal can interact with the core network device about the discontinuous coverage information, thereby making behavior of the terminal be consistent with definition of the core network device, to avoid the core network device thinking that the terminal is in an abnormal situation, and to achieve the goal of saving power for the terminal while ensuring normal behavior of the terminal.

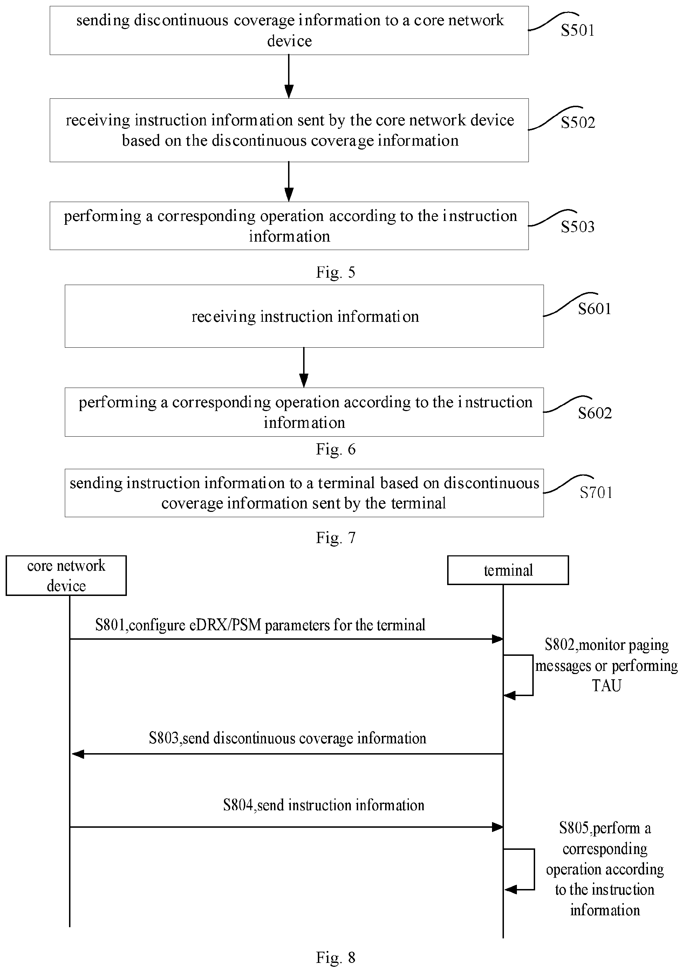

Please refer to Fig. 5, which is a flowchart of another method for interaction between a terminal and a core network provided in an embodiment of the present disclosure. It should be noted that, the method for interaction between the terminal and the core network can be applied to IoT-NTN discontinuous coverage scenarios. The method for interaction between the terminal and the core network in the present embodiment can be performed by the terminal. As shown in Fig. 5, this method may include but is not limited to the following steps:
step S501, sending discontinuous coverage information to a core network device.

Optionally, when the terminal is in an IoT-NTN discontinuous coverage scenario, the terminal can interact with the core network device to send the discontinuous coverage information to the core network device. That is to say, when the terminal is in an IoT-NTN discontinuous coverage scenario, it needs to interact with the core network device for discontinuous coverage information. This can enable the core network device to understand the current network coverage situation of the terminal, such as when the UE enters non-IoT-NTN network coverage, and when the UE enters an IoT-NTN network coverage scenario from non-IoT-NTN network coverage.

In an implementation, the discontinuous coverage information may include, but is not limited to, any of following items 1) and 2):
1) providing time information of IoT-NTN network coverage and/or of non-IoT-NTN network coverage for the terminal.
2) the terminal being enter non-IoT-NTN network coverage. Optionally, the core network device can send first indication information to the core network device, and the core network device can determine that the UE will enter non-IoT-NTN network coverage according to the first indication information.

In an implementation, providing time information of IoT-NTN network coverage and/or of non-IoT-NTN network coverage for the terminal may be at least one time period, or may be time of entering non-IoT-NTN network coverage, or may be time of leaving non-IoT-NTN network coverage, or may be time of returning to non-IoT-NTN network coverage. As an example, providing time information of IoT-NTN network coverage and/or of non-IoT-NTN network coverage for the terminal may include any one of following:
1) time when the terminal enters non-IoT-NTN network coverage, and/or leaves non-IoT-NTN network coverage;
2) time when the terminal enters non-IoT-NTN network coverage, and/or returns to IoT-NTN network coverage;
3) a plurality of time periods, each time period including time when the terminal enters non-IoT-NTN network coverage, and/or leaves non-IoT-NTN network coverage, or each time period including time when the terminal enters non-IoT-NTN network coverage, and/or returns to IoT-NTN network coverage; for example, time period (T1, T2), time period (T3, T4), wherein T1 is the time of entering non-IoT-NTN network coverage, T2 is the time of leaving non-IoT-NTN network coverage, T3 is the time of entering a next non-IoT-NTN network coverage, and T4 is the time of leaving the next non-IoT-NTN network coverage, the time period from T2 to T3 represents the time in which there is the IoT-NTN network coverage.

It should be noted that in some embodiments of the present disclosure, the terminal may predict discontinuous coverage scenarios based on auxiliary information sent by the base station. For example, a base station sends auxiliary information to the terminal. When the terminal receives the auxiliary information sent by the base station, it can predict the IoT-NTN discontinuous coverage scenario based on the auxiliary information, for example, it can predict that the terminal is currently or will be in the IoT-NTN discontinuous coverage scenario. The auxiliary information may be ephemeris information, for example, the terminal can predict that the terminal is currently or will be in an IoT-NTN discontinuous coverage scenario based on the ephemeris information sent by the base station. For example, the terminal can predict the current network coverage situation of the terminal based on the ephemeris information provided by the base station, such as when the UE enters non-IoT-NTN network coverage, and when the UE enters IoT-NTN network coverage from non-IoT-NTN network coverage.

It should also be noted that in some embodiments of the present disclosure, there are many ways in which the terminal can send the discontinuous coverage information to the core network device. For example, the discontinuous coverage information can be sent through the attach process or the tracking area update process. Alternatively, the discontinuous coverage information can be sent when the base station provides auxiliary information for the terminal to predict discontinuous coverage scenarios. Alternatively, the discontinuous coverage information can be sent when the core network device configures eDRX and/or PSM for the terminal. Below are three examples to describe the implementation of sending discontinuous coverage information.

In one possible implementation example, the terminal may send the discontinuous coverage information to the core network device through the attach process or tracking area update process. For example, the terminal can send the discontinuous coverage information in an Attach request message, or the terminal can also send the discontinuous coverage information in a Tracking area update (TAU) request message.

In one possible implementation example, the terminal may send the discontinuous coverage information to the core network device upon receiving auxiliary information sent by the base station for predicting discontinuous coverage scenarios. For example, when the base station provides auxiliary information for the terminal to predict discontinuous coverage scenarios, the terminal can predict the discontinuous coverage information and send it to the core network device.

In one possible implementation example, the terminal may send the discontinuous coverage information to the core network device when the core network device configures eDRX parameters and/or PSM parameters for the terminal. For example, when the core network device configures eDRX and/or PSM for the terminal, the terminal can send the discontinuous coverage information to the core network device.

step S502, receiving instruction information sent by the core network device based on the discontinuous coverage information.

Optionally, the terminal sends discontinuous coverage information to the core network device when predicting the IoT-NTN discontinuous coverage scenario based on the auxiliary information provided by the base station. When the core network device receives the discontinuous coverage information sent by the terminal, it can send instruction information to the terminal based on the discontinuous coverage information, so that the terminal can receive the instruction information sent by the core network device.

In one implementation, the instruction information may include, but is not limited to any one of following items 1)-3):
1) instructing the terminal to ignore an extended discontinuous reception (eDRX) configuration parameter and/or a power save mode (PSM) configuration parameter;
2) instructing the terminal to stop using an eDRX mode and/or a PSM mode when entering non-IoT-NTN network coverage, and to continue to perform according to an eDRX configuration and/or a PSM configuration when entering an IoT-NTN network coverage scenario;
3) instructing the terminal to use a new eDRX configuration parameter and/or a new PSM configuration parameter.

That is to say, when the core network device receives the discontinuous coverage information sent by the terminal, it may include the following behavior: instructing the terminal to ignore eDRX configuration parameters and/or PSM configuration parameters; or, instructing the terminal to stop using eDRX/PSM mode in scenarios without IoT-NTN network coverage, and continue to perform according to eDRX/PSM configuration in scenarios with IoT-NTN network coverage, for example, assuming time period (T1, T2) and time period (T3, T4), where T1 is the time of entering non-IoT-NTN network coverage, T2 is the time of leaving non-IoT-NTN network coverage, T3 is the time of entering the next non-IoT-NTN network coverage, T4 is the time of leaving the next non-IoT-NTN network coverage, where the time period from T2 to T3 represents the time in which there is IoT-NTN network coverage, the core network device can instruct the terminal to stop eDRX/PSM during the time periods (T1, T2) and (T3, T4), and perform eDRX/PSM during the time period (T2, T3); or, updating the eDRX/PSM parameters, and instructing the terminal to use the new eDRX/PSM configuration parameters.

Optionally, in some embodiments of the present disclosure, as shown in Fig. 5, the method may further include: step S503, the terminal may also perform corresponding operations based on the instruction information sent by the core network device.

Optionally, when the terminal receives the above instruction information sent by the core network device, it can perform corresponding operations based on the instruction information.

In one possible implementation, it is assumed that the instruction information includes instructing the terminal to ignore eDRX configuration parameters and/or PSM configuration parameters. When the terminal receives the instruction message, it is instructed to ignore the eDRX and/or PSM parameters configured by the core network when the terminal is in the discontinuous coverage scenario, based on the instruction information.

That is to say, the terminal can ignore eDRX and/or PSM configuration when receiving instruction information. For example, when the T3412 timer expires, the terminal does not perform TAU; when it is within PTW, the terminal does not monitor paging messages.

In one possible implementation, it is assumed that the instruction information includes instructing the terminal to stop using eDRX and/or PSM mode when entering non-IoT-NTN network coverage, and to continue to perform according to eDRX and/or PSM configuration when entering an IoT-NTN network coverage scenario. When the terminal receives the instruction message, it is instructed to ignore the eDRX and/or PSM parameters configured by the core network when entering non-IoT-NTN network coverage, and continue to perform eDRX and/or PSM configuration when entering an IoT-NTN network coverage scenario.

For example, assuming time period (T1, T2) and time period (T3, T4), where T1 is the time of entering non-IoT-NTN network coverage, T2 is the time of leaving non-IoT-NTN network coverage, T3 is the time of entering the next non-IoT-NTN network coverage, T4 is the time of leave the next non-IoT-NTN network coverage, where the time period from T2 to T3 represents the time in which there is IoT-NTN network coverage. When receiving the instruction information from the core network device, the terminal can ignore eDRX/PSM configuration and remain the sleep state in the scenarios without IoT-NTN network coverage, such as during periods (T1, T2), (T3, T4), and continue to perform eDRX/PSM, i.e., monitor paging messages and perform TAU according to the configuration, during the time period (T2, T3) in which there is the IoT-NTN network coverage.

In one possible implementation, it is assumed that the instruction information includes instructing the terminal to use new eDRX configuration parameters and/or new PSM configuration parameters. When the terminal receives the instruction message, it is instructed to use the new eDRX configuration and/or new PSM configuration configured by the core network based on the instruction information.

That is to say, when the core network device receives discontinuous coverage information sent by the terminal, it can update the eDRX/PSM parameters, instructing the terminal to use the new eDRX/PSM configuration parameters. In this way, when the terminal receives the instruction message sent by the core network device, it can be instructed to use the new eDRX/PSM configuration parameters based on the instruction information.

By implementing the embodiments of the present disclosure, the terminal sends the discontinuous coverage information to the core network device and receives instruction information sent by the core network device based on the discontinuous coverage information, and performs corresponding operations according to the instruction information. For example, the terminal can be instructed to ignore eDRX and/or PSM configuration, or the terminal can be instructed to stop eDRX/PSM in a non-network coverage scenario and continue to perform according to eDRX/PSM configuration in a network coverage scenario, or the terminal can be instructed to use new eDRX/PSM configuration parameters. From this, it can be seen that the present disclosure ensures that the behavior of the terminal is consistent with the definition of the core network device by enabling the discontinuous coverage information interaction between the terminal and the core network device, in order to avoid the core network device believing that the terminal is in an abnormal situation. This can not only achieve the goal of saving power for the terminal, but also ensure the normal behavior of the terminal.

In In some embodiments of the present disclosure, as shown in Fig. 6, the method for interaction between the terminal and the core network may include but is not limited to the following steps.

Step S601, the terminal receives instruction information.

In an implementation, the terminal may receive the instruction information sent by the core network device.

In one possible implementation, the instruction information may include but is not limited to any of following items 1)-3):
1) instructing the terminal to ignore an extended discontinuous reception (eDRX) configuration parameter and/or a power save mode (PSM) configuration parameter;
2) instructing the terminal to stop using an eDRX mode and/or a PSM mode when entering non-IoT-NTN network coverage, and to continue to perform according to an eDRX configuration and/or a PSM configuration when entering an IoT-NTN network coverage scenario;
3) instructing the terminal to use a new eDRX configuration parameter and/or a new PSM configuration parameter.

That is to say, when the core network device receives the discontinuous coverage information sent by the terminal, it may include the following behavior: instructing the terminal to ignore eDRX configuration parameters and/or PSM configuration parameters; or, instructing the terminal to stop using eDRX/PSM mode in scenarios without IoT-NTN network coverage, and continue to perform according to eDRX/PSM configuration in scenarios with IoT-NTN network coverage, for example, assuming time period (T1, T2) and time period (T3, T4), where T1 is the time of entering non-IoT-NTN network coverage, T2 is the time of leaving non-IoT-NTN network coverage, T3 is the time of entering the next non-IoT-NTN network coverage, T4 is the time of leaving the next non-IoT-NTN network coverage, where the time period from T2 to T3 represents the time in which there is IoT-NTN network coverage, the core network device can instruct the terminal to stop eDRX/PSM during the time periods (T1, T2) and (T3, T4), and perform eDRX/PSM during the time period (T2, T3); or, updating the eDRX/PSM parameters, and instructing the terminal to use the new eDRX/PSM configuration parameters.

Optionally, in some embodiments of the present disclosure, as shown in Fig. 6, the method for interaction between the terminal and the core network may further include step S602, the terminal performs corresponding operations according to the instruction information.

In one possible implementation, it is assumed that the instruction information includes instructing the terminal to ignore eDRX configuration parameters and/or PSM configuration parameters. When the terminal receives the instruction message, it is instructed to ignore the eDRX and/or PSM parameters configured by the core network when the terminal is in the discontinuous coverage scenario, based on the instruction information.

That is to say, the terminal can ignore eDRX and/or PSM configuration when receiving instruction information. For example, when the T3412 timer expires, the terminal does not perform TAU; when it is within PTW, the terminal does not monitor paging messages.

In one possible implementation, it is assumed that the instruction information includes instructing the terminal to stop using eDRX and/or PSM mode when entering non-IoT-NTN network coverage, and to continue to perform according to eDRX and/or PSM configuration when entering an IoT-NTN network coverage scenario. When the terminal receives the instruction message, it is instructed to ignore the eDRX and/or PSM parameters configured by the core network when entering non-IoT-NTN network coverage, and continue to perform eDRX and/or PSM configuration when entering an IoT-NTN network coverage scenario.

For example, assuming time period (T1, T2) and time period (T3, T4), where T1 is the time of entering non-IoT-NTN network coverage, T2 is the time of leaving non-IoT-NTN network coverage, T3 is the time of entering the next non-IoT-NTN network coverage, T4 is the time of leave the next non-IoT-NTN network coverage, where the time period from T2 to T3 represents the time in which there is IoT-NTN network coverage. When receiving the instruction information from the core network device, the terminal can ignore eDRX/PSM configuration and remain the sleep state in the scenarios without IoT-NTN network coverage, such as during periods (T1, T2), (T3, T4), and continue to perform eDRX/PSM, i.e., monitor paging messages and perform TAU according to the configuration, during the time period (T2, T3) in which there is the IoT-NTN network coverage.

In one possible implementation, it is assumed that the instruction information includes instructing the terminal to use new eDRX configuration parameters and/or new PSM configuration parameters. When the terminal receives the instruction message, it is instructed to use the new eDRX configuration and/or new PSM configuration configured by the core network based on the instruction information.

For example, when the core network device receives discontinuous coverage information sent by the terminal, it can update the eDRX/PSM parameters, instructing the terminal to use the new eDRX/PSM configuration parameters. In this way, when the terminal receives the instruction message sent by the core network device, it can be instructed to use the new eDRX/PSM configuration parameters based on the instruction information.

By implementing the embodiments of the present disclosure, the terminal receives instruction information, and performs corresponding operations according to the instruction information. For example, the terminal can be instructed to ignore eDRX and/or PSM configuration, or the terminal can be instructed to stop eDRX/PSM in a non-network coverage scenario and continue to perform according to eDRX/PSM configuration in a network coverage scenario, or the terminal can be instructed to use new eDRX/PSM configuration parameters. From this, it can be seen that, in the present disclosure, the core network sends the instruction information to the terminal to ensure that the behavior of the terminal is consistent with the definition of the core network device, in order to avoid the core network device believing that the terminal is in an abnormal situation. This can not only achieve the goal of saving power for the terminal, but also ensure the normal behavior of the terminal.

It can be understood that the above embodiments describes the implementation of the method for interaction between the terminal and the core network of embodiments of the present disclosure from the terminal side. Embodiments of the present disclosure also proposes a method for interaction between a terminal and a core network. The following will describe the implementation of the method for interaction between the terminal and the core network from the core network device side. Please refer to Fig. 7, which is a flowchart of another method for interaction between a terminal and a core network provided in an embodiment of the present disclosure. It should be noted that the method for interaction between the terminal and the core network in the present embodiment is applied to the IoT-NTN discontinuous coverage scenario. The method for interaction between the terminal and the core network in the present embodiment can be performed by the core network device. As shown in Fig. 7, this method may include but is not limited to the following steps.

Step S701, sending instruction information to the terminal based on discontinuous coverage information.

In one implementation, the discontinuous coverage information may be pre-configured. For example, the core network can send instruction information to the terminal based on pre-configured discontinuous coverage information.

In another implementation, the discontinuous coverage information may be obtained through a base station. For example, the core network can send instruction information to the terminal based on the discontinuous coverage information obtained through the base station.

In yet another implementation, the discontinuous coverage information may be the information sent by the terminal to the core network device when the terminal predicts that the terminal is in a discontinuous coverage scenario based on the auxiliary information provided by the base station.

Optionally, in some embodiments, the core network device can receive the discontinuous coverage information sent by the terminal, and send the instruction information to the terminal based on the discontinuous coverage information.

For example, a base station provides auxiliary information (such as ephemeris information). When the terminal receives auxiliary information sent by the base station, it can predict discontinuous coverage scenarios based on this auxiliary information. The terminal can send discontinuous coverage information to the core network device, so that the core network device can send instruction information to the terminal based on this discontinuous coverage information. For example, the core network device can send the instruction information to the terminal in an Attach accept message or in a Tracking area update accept message.

In an implementation, the discontinuous coverage information may include, but is not limited to, any of following items 1) and 2):
1) providing time information of IoT-NTN network coverage and/or of non-IoT-NTN network coverage for the terminal.
2) the terminal being enter non-IoT-NTN network coverage. Optionally, the core network device can send first indication information to the core network device, and the core network device can determine that the UE will enter non-IoT-NTN network coverage according to the first indication information.

In an implementation, providing time information of IoT-NTN network coverage and/or of non-IoT-NTN network coverage for the terminal may be at least one time period, or may be time of entering non-IoT-NTN network coverage, or may be time of leaving non-IoT-NTN network coverage, or may be time of returning to non-IoT-NTN network coverage. As an example, providing time information of IoT-NTN network coverage and/or of non-IoT-NTN network coverage for the terminal may include any one of following:
1) time when the terminal enters non-IoT-NTN network coverage, and/or leaves non-IoT-NTN network coverage;
2) time when the terminal enters non-IoT-NTN network coverage, and/or returns to IoT-NTN network coverage;
3) a plurality of time periods, each time period including time when the terminal enters non-IoT-NTN network coverage, and/or leaves non-IoT-NTN network coverage, or each time period including time when the terminal enters non-IoT-NTN network coverage, and/or returns to IoT-NTN network coverage; for example, time period (T1, T2), time period (T3, T4), wherein T1 is the time of entering non-IoT-NTN network coverage, T2 is the time of leaving non-IoT-NTN network coverage, T3 is the time of entering a next non-IoT-NTN network coverage, and T4 is the time of leaving the next non-IoT-NTN network coverage, the time period from T2 to T3 represents the time in which there is the IoT-NTN network coverage.

It should be noted that in some embodiments of the present disclosure, the terminal may predict discontinuous coverage scenarios based on auxiliary information sent by the base station. For example, a base station sends auxiliary information to the terminal. When the terminal receives the auxiliary information sent by the base station, it can predict the IoT-NTN discontinuous coverage scenario based on the auxiliary information, for example, it can predict that the terminal is currently or will be in the IoT-NTN discontinuous coverage scenario. The auxiliary information may be ephemeris information, for example, the terminal can predict that the terminal is currently or will be in an IoT-NTN discontinuous coverage scenario based on the ephemeris information sent by the base station. For example, the terminal can predict the current network coverage situation of the terminal based on the ephemeris information provided by the base station, such as when the UE enters non-IoT-NTN network coverage, and when the UE enters IoT-NTN network coverage from non-IoT-NTN network coverage.

It should also be noted that in some embodiments of the present disclosure, there are many ways in which the terminal can send the discontinuous coverage information to the core network device. For example, the discontinuous coverage information can be sent through the attach process or the tracking area update process. Alternatively, the discontinuous coverage information can be sent when the base station provides auxiliary information for the terminal to predict discontinuous coverage scenarios. Alternatively, the discontinuous coverage information can be sent when the core network device configures eDRX and/or PSM for the terminal. Below are three examples to describe the implementation of sending discontinuous coverage information.

In one possible implementation example, the terminal may send the discontinuous coverage information to the core network device upon receiving auxiliary information sent by the base station for predicting discontinuous coverage scenarios. For example, when the base station provides auxiliary information for the terminal to predict discontinuous coverage scenarios, the terminal can predict the discontinuous coverage information and send it to the core network device.

In one possible implementation example, the terminal may send the discontinuous coverage information to the core network device when the core network device configures eDRX parameters and/or PSM parameters for the terminal. For example, when the core network device configures eDRX and/or PSM for the terminal, the terminal can send the discontinuous coverage information to the core network device. in this way, when the core network receives the discontinuous coverage information, it can send the instruction information to the terminal. In one implementation, the instruction information may include, but is not limited to any one of following items 1)-3):
1) instructing the terminal to ignore an extended discontinuous reception (eDRX) configuration parameter and/or a power save mode (PSM) configuration parameter;
2) instructing the terminal to stop using an eDRX mode and/or a PSM mode when entering non-IoT-NTN network coverage, and to continue to perform according to an eDRX configuration and/or a PSM configuration when entering an IoT-NTN network coverage scenario;
3) instructing the terminal to use a new eDRX configuration parameter and/or a new PSM configuration parameter.

In embodiments of the present disclosure, when the core network device receives the discontinuous coverage information sent by the terminal, it may include the following behavior: instructing the terminal to ignore eDRX configuration parameters and/or PSM configuration parameters; or, instructing the terminal to stop using eDRX/PSM mode in scenarios without IoT-NTN network coverage, and continue to perform according to eDRX/PSM configuration in scenarios with IoT-NTN network coverage, for example, assuming time period (T1, T2) and time period (T3, T4), where T1 is the time of entering non-IoT-NTN network coverage, T2 is the time of leaving non-IoT-NTN network coverage, T3 is the time of entering the next non-IoT-NTN network coverage, T4 is the time of leaving the next non-IoT-NTN network coverage, where the time period from T2 to T3 represents the time in which there is IoT-NTN network coverage, the core network device can instruct the terminal to stop eDRX/PSM during the time periods (T1, T2) and (T3, T4), and perform eDRX/PSM during the time period (T2, T3); or, updating the eDRX/PSM parameters, and instructing the terminal to use the new eDRX/PSM configuration parameters.

When the terminal receives the above instruction information sent by the core network device, it can perform corresponding operations based on the instruction information.

In one possible implementation, it is assumed that the instruction information includes instructing the terminal to ignore eDRX configuration parameters and/or PSM configuration parameters. When the terminal receives the instruction message, it is instructed to ignore the eDRX and/or PSM parameters configured by the core network when the terminal is in the discontinuous coverage scenario, based on the instruction information.

That is to say, the terminal can ignore eDRX and/or PSM configuration when receiving instruction information. For example, when the T3412 timer expires, the terminal does not perform TAU; when it is within PTW, the terminal does not monitor paging messages.

In one possible implementation, it is assumed that the instruction information includes instructing the terminal to stop using eDRX and/or PSM mode when entering non-IoT-NTN network coverage, and to continue to perform according to eDRX and/or PSM configuration when entering an IoT-NTN network coverage scenario. When the terminal receives the instruction message, it is instructed to ignore the eDRX and/or PSM parameters configured by the core network when entering non-IoT-NTN network coverage, and continue to perform eDRX and/or PSM configuration when entering an IoT-NTN network coverage scenario.

For example, assuming time period (T1, T2) and time period (T3, T4), where T1 is the time of entering non-IoT-NTN network coverage, T2 is the time of leaving non-IoT-NTN network coverage, T3 is the time of entering the next non-IoT-NTN network coverage, T4 is the time of leave the next non-IoT-NTN network coverage, where the time period from T2 to T3 represents the time in which there is IoT-NTN network coverage. When receiving the instruction information from the core network device, the terminal can ignore eDRX/PSM configuration and remain the sleep state in the scenarios without IoT-NTN network coverage, such as during periods (T1, T2), (T3, T4), and continue to perform eDRX/PSM, i.e., monitor paging messages and perform TAU according to the configuration, during the time period (T2, T3) in which there is the IoT-NTN network coverage.

In one possible implementation, it is assumed that the instruction information includes instructing the terminal to use new eDRX configuration parameters and/or new PSM configuration parameters. When the terminal receives the instruction message, it is instructed to use the new eDRX configuration and/or new PSM configuration configured by the core network based on the instruction information.

That is to say, when the core network device receives discontinuous coverage information sent by the terminal, it can update the eDRX/PSM parameters, instructing the terminal to use the new eDRX/PSM configuration parameters. In this way, when the terminal receives the instruction message sent by the core network device, it can be instructed to use the new eDRX/PSM configuration parameters based on the instruction information.

In one implementation, the core network device can confirm that the terminal does not perform eDRX configuration and/or PSM configuration when there is no IoT-NTN network coverage. For example, the core network device can confirm that the terminal does not perform eDRX/PSM when there is no IoT-NTN network coverage, that is, the core network device believes that paging cannot reach the terminal, and the terminal does not perform TAU are not abnormal situations.

In one implementation, in response to the terminal being in non-IoT-NTN network coverage and requiring a paging message to be sent to the terminal, the paging message for the terminal is saved. For example, if there is a paging message for a terminal in non-IoT-NTN network coverage, the core network device saves the paging message for the terminal.

By implementing the embodiments of the present disclosure, the core network device sends the instructions information to the terminal based on the discontinuous coverage information sent by the terminal, so that the terminal performs corresponding operations according to the instruction information. For example, the terminal can be instructed to ignore eDRX and/or PSM configuration, or the terminal can be instructed to stop eDRX/PSM in a non-network coverage scenario and continue to perform according to eDRX/PSM configuration in a network coverage scenario, or the terminal can be instructed to use new eDRX/PSM configuration parameters. From this, it can be seen that the present disclosure ensures that the behavior of the terminal is consistent with the definition of the core network device by enabling the discontinuous coverage information interaction between the terminal and the core network device, in order to avoid the core network device believing that the terminal is in an abnormal situation. This can not only achieve the goal of saving power for the terminal, but also ensure the normal behavior of the terminal.

In order to facilitate those skilled in the art to have a clearer understanding of the present disclosure, the following will describe the method for interaction between the terminal and the core network from both sides of the core network device and the terminal, combined with Fig. 8.

As shown in Fig. 8, in some embodiments of the present disclosure, the core network device configures eDRX/PSM parameters for the terminal (S801). The terminal monitors paging messages or performs tracking area updates (TAU) based on the eDRX/PSM parameters configured by the core network device (S802). When the base station provides auxiliary information for the terminal to predict discontinuous coverage scenarios, the terminals can predict discontinuous coverage information and send the discontinuous coverage information to the core network device (S803). The discontinuous coverage information may include but is not limited to any of the following items 1) to 2):
1) providing time information of IoT-NTN network coverage and/or of non-IoT-NTN network coverage for the terminal.
2) the terminal being enter non-IoT-NTN network coverage. Optionally, the core network device can send first indication information to the core network device, and the core network device can determine that the UE will enter non-IoT-NTN network coverage according to the first indication information.

In an implementation, providing time information of IoT-NTN network coverage and/or of non-IoT-NTN network coverage for the terminal may be at least one time period, or may be time of entering non-IoT-NTN network coverage, or may be time of leaving non-IoT-NTN network coverage, or may be time of returning to non-IoT-NTN network coverage. As an example, providing time information of IoT-NTN network coverage and/or of non-IoT-NTN network coverage for the terminal may include any one of following:
1) time when the terminal enters non-IoT-NTN network coverage, and/or leaves non-IoT-NTN network coverage;
2) time when the terminal enters non-IoT-NTN network coverage, and/or returns to IoT-NTN network coverage;
3) a plurality of time periods, each time period including time when the terminal enters non-IoT-NTN network coverage, and/or leaves non-IoT-NTN network coverage, or each time period including time when the terminal enters non-IoT-NTN network coverage, and/or returns to IoT-NTN network coverage; for example, time period (T1, T2), time period (T3, T4), wherein T1 is the time of entering non-IoT-NTN network coverage, T2 is the time of leaving non-IoT-NTN network coverage, T3 is the time of entering a next non-IoT-NTN network coverage, and T4 is the time of leaving the next non-IoT-NTN network coverage, the time period from T2 to T3 represents the time in which there is the IoT-NTN network coverage.

In some embodiments of the present application, as shown in Fig. 8, the core network device may receive the discontinuous coverage information sent by the terminal and send the instruction information to the terminal based on the discontinuous coverage information (S804). The instruction information may include but is not limited to any one of the following items 1) to 3):
1) instructing the terminal to ignore an extended discontinuous reception (eDRX) configuration parameter and/or a power save mode (PSM) configuration parameter;
2) instructing the terminal to stop using an eDRX mode and/or a PSM mode when entering non-IoT-NTN network coverage, and to continue to perform according to an eDRX configuration and/or a PSM configuration when entering an IoT-NTN network coverage scenario;
3) instructing the terminal to use a new eDRX configuration parameter and/or a new PSM configuration parameter.

In some embodiments of the present disclosure, as shown in Fig. 8, the terminal may receive the instruction information sent by the core network, and performing corresponding operations according to the instruction information (S805).

In one possible implementation, it is assumed that the instruction information includes instructing the terminal to ignore eDRX configuration parameters and/or PSM configuration parameters. When the terminal receives the instruction message, it is instructed to ignore the eDRX and/or PSM parameters configured by the core network when the terminal is in the discontinuous coverage scenario, based on the instruction information.

That is to say, the terminal can ignore eDRX and/or PSM configuration when receiving instruction information. For example, when the T3412 timer expires, the terminal does not perform TAU; when it is within PTW, the terminal does not monitor paging messages.

In one possible implementation, it is assumed that the instruction information includes instructing the terminal to stop using eDRX and/or PSM mode when entering non-IoT-NTN network coverage, and to continue to perform according to eDRX and/or PSM configuration when entering an IoT-NTN network coverage scenario. When the terminal receives the instruction message, it is instructed to ignore the eDRX and/or PSM parameters configured by the core network when entering non-IoT-NTN network coverage, and continue to perform eDRX and/or PSM configuration when entering an IoT-NTN network coverage scenario.

For example, assuming time period (T1, T2) and time period (T3, T4), where T1 is the time of entering non-IoT-NTN network coverage, T2 is the time of leaving non-IoT-NTN network coverage, T3 is the time of entering the next non-IoT-NTN network coverage, T4 is the time of leave the next non-IoT-NTN network coverage, where the time period from T2 to T3 represents the time in which there is IoT-NTN network coverage. When receiving the instruction information from the core network device, the terminal can ignore eDRX/PSM configuration and remain the sleep state in the scenarios without IoT-NTN network coverage, such as during periods (T1, T2), (T3, T4), and continue to perform eDRX/PSM, i.e., monitor paging messages and perform TAU according to the configuration, during the time period (T2, T3) in which there is the IoT-NTN network coverage.

In one possible implementation, it is assumed that the instruction information includes instructing the terminal to use new eDRX configuration parameters and/or new PSM configuration parameters. When the terminal receives the instruction message, it is instructed to use the new eDRX configuration and/or new PSM configuration configured by the core network based on the instruction information.

That is to say, when the core network device receives discontinuous coverage information sent by the terminal, it can update the eDRX/PSM parameters, instructing the terminal to use the new eDRX/PSM configuration parameters. In this way, when the terminal receives the instruction message sent by the core network device, it can be instructed to use the new eDRX/PSM configuration parameters based on the instruction information.

In the above embodiments provided in this disclosure, the methods provided are introduced from the perspectives of the terminal and the core network device. In order to achieve the various functions of the methods provided in the embodiments of the present disclosure, the terminal and the core network device may include hardware structures and software modules, which are implemented in the form of hardware structures, software modules, or hardware structures plus software modules. One of the above functions can be performed in the form of hardware structure, software module, or hardware structure plus software module.

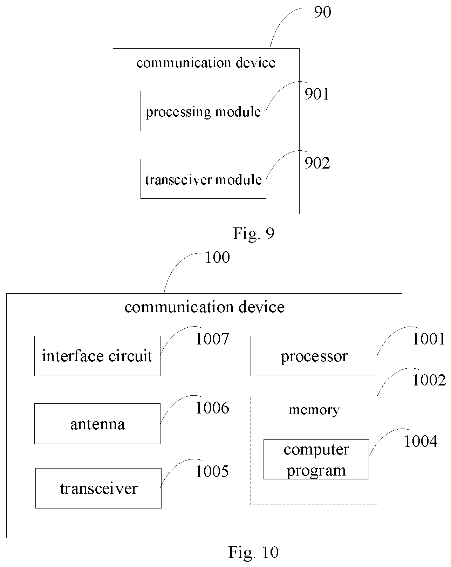

Please refer to Fig. 9, which is a block diagram of a communication device 90 provided in an embodiment of the present disclosure. The communication device 90 shown in Fig. 9 may include a transceiver module 901 and a processing module 902. The transceiver module 901 may include a sending module and/or a receiving module, the sending module for implementing the sending function, the receiving module for implementing the receiving function, and the transceiver module 902 can implement the sending and/or receiving function.

The communication device 90 may be a terminal, a device within the terminal, or a device that can be matched and used with the terminal. Alternatively, the communication device 90 may be a network device, a device within the network device, or a device that can be matched and used with the network device. It should be noted that the communication device 90 is applied to IoT-NTN discontinuous coverage scenarios.

The communication device 90 is the terminal. In embodiments of the present disclosure, the transceiver module 901 is configured to send discontinuous coverage information to a core network device.

In an implementation, the transceiver module 901 is further configured to receive instruction information sent by the core network device based on the discontinuous coverage information; the processing module is configured to perform corresponding operations according to the instruction information.

In an implementation, the instruction information includes any of following items:
1) instructing the terminal to ignore an extended discontinuous reception (eDRX) configuration parameter and/or a power save mode (PSM) configuration parameter;
2) instructing the terminal to stop using an eDRX mode and/or a PSM mode when entering non-IoT-NTN network coverage, and to continue to perform according to an eDRX configuration and/or a PSM configuration when entering an IoT-NTN network coverage scenario;
3) instructing the terminal to use a new eDRX configuration parameter and/or a new PSM configuration parameter.

In an implementation, the processing module 902 is specifically configured to instruct the terminal to ignore the eDRX configuration parameter and/or the PSM configuration parameter configured by the core network device when the terminal enters the discontinuous coverage scenario, according to the instruction information.

In a possible implementation, the processing module 902 is specifically configured to instruct the terminal to ignore the eDRX configuration parameter and/or the PSM configuration parameter configurated by the core network when entering non-IoT-NTN network coverage, and to continue to perform the eDRX configuration and/or the PSM configuration when entering the IoT-NTN network coverage scenario, according to the instruction information.

In a possible implementation, the processing module 902 is specifically configured to instruct the terminal to use a new eDRX configuration and/or a new PSM configuration configured by the core network, according to the instruction information.

In a possible implementation, the transceiver module 901 is specifically configured to send the discontinuous coverage information to the core network device through an attach process or a tracking area update process.

In a possible implementation, the transceiver module 901 is specifically configured to send the discontinuous coverage information to the core network device in response to receiving auxiliary information sent by a base station for the terminal to predict the discontinuous coverage scenario.

In a possible implementation, the transceiver module 901 is specifically configured to send the discontinuous coverage information to the core network device in case that the core network device configures an eDRX parameter and/or a PSM parameter for the terminal.

In a possible implementation, the discontinuous coverage information includes any one of following items:
providing time information of IoT-NTN network coverage and/or of non-IoT-NTN network coverage for the terminal; and
the terminal being enter non-IoT-NTN network coverage.

In a possible implementation, providing time information of IoT-NTN network coverage and/or of non-IoT-NTN network coverage for the terminal includes any of following items:
1) time when the terminal enters non-IoT-NTN network coverage, and/or leaves non-IoT-NTN network coverage;
2) time when the terminal enters non-IoT-NTN network coverage, and/or returns to IoT-NTN network coverage;
3) a plurality of time periods, each time period including time when the terminal enters non-IoT-NTN network coverage, and/or leaves non-IoT-NTN network coverage, or each time period including time when the terminal enters non-IoT-NTN network coverage, and/or time returns to IoT-NTN network coverage; for example, time period (T1, T2), time period (T3, T4), wherein T1 is the time of entering non-IoT-NTN network coverage, T2 is the time of leaving non-IoT-NTN network coverage, T3 is the time of entering a next non-IoT-NTN network coverage, and T4 is the time of leaving the next non-IoT-NTN network coverage, the time period from T2 to T3 represents the time in which there is the IoT-NTN network coverage.

The communication device 90 is the core network device. In embodiments of the present disclosure, the transceiver module 901 is configured to send instruction information to the terminal based on discontinuous coverage information.

In an implementation, the transceiver module 901 is specifically configured to receive the discontinuous coverage information sent by the terminal; and send the instruction information to the terminal based on the discontinuous coverage information.

In an implementation, the instruction information may include any of following items:
instructing the terminal to ignore an extended discontinuous reception (eDRX) configuration parameter and/or a power save mode (PSM) configuration parameter;
instructing the terminal to stop using an eDRX mode and/or a PSM mode when entering non-IoT-NTN network coverage, and to continue to perform according to an eDRX configuration and/or a PSM configuration when entering an IoT-NTN network coverage scenario;
instructing the terminal to use a new eDRX configuration parameter and/or a new PSM configuration parameter.

In an implementation, the processing module 902 is configured to determine that the terminal does not perform the eDRX configuration and/or the PSM configuration in non-IoT-NTN network coverage.

In an implementation, the processing module 902 is configured to, in response to the terminal being in non-IoT-NTN network coverage and requiring a paging message to be sent to the terminal, save the paging message for the terminal.

In an implementation, the transceiver module 901 is specifically configured to send the instruction information to the terminal in an attach accept message or a tracking area update accept message.

In an implementation, the discontinuous coverage information includes any of following items:
providing time information of IoT-NTN network coverage and/or of non-IoT-NTN network coverage for the terminal; and
the terminal being enter non-IoT-NTN network coverage.

In a possible implementation, providing time information of IoT-NTN network coverage and/or of non-IoT-NTN network coverage for the terminal includes any of following items:
1) time when the terminal enters non-IoT-NTN network coverage, and/or leaves non-IoT-NTN network coverage;
2) time when the terminal enters non-IoT-NTN network coverage, and/or returns to IoT-NTN network coverage;
3) a plurality of time periods, each time period including time when the terminal enters non-IoT-NTN network coverage, and/or leaves non-IoT-NTN network coverage, or each time period including time when the terminal enters non-IoT-NTN network coverage, and/or returns to IoT-NTN network coverage; for example, time period (T1, T2), time period (T3, T4), wherein T1 is the time of entering non-IoT-NTN network coverage, T2 is the time of leaving non-IoT-NTN network coverage, T3 is the time of entering a next non-IoT-NTN network coverage, and T4 is the time of leaving the next non-IoT-NTN network coverage, the time period from T2 to T3 represents the time in which there is the IoT-NTN network coverage.

Regarding the device in the above embodiments, the specific ways in which each module performs operations have been described in detail in the embodiments related to the method, and will not be elaborated here.

Please refer to Fig. 10, which is a block diagram of another communication device 100 provided in an embodiment of the present disclosure. It should be noted that, the communication device 100 can be applied to the IoT-NTN discontinuous coverage scenario. The communication device 100 may be a core network device or a may be a terminal, or may be a chip, chip system, processor, etc that supports the core network device in implementing the above method, or may be a chip, chip system, processor, etc that supports the terminal in implementing the above method. This device can be configured to implement the methods described in the above method embodiments, as described in the above method embodiments.

The communication device 100 may include one or more processor 1001. The processor 1001 may be a general-purpose processor, a dedicated processor, or the like. For example, it may be a baseband processor or a central processing unit. The baseband processor can be used to process communication protocols and data, while the central processor can be used to control communication devices (such as base stations, baseband chips, terminals, terminal chips, DU or CU, etc.), execute computer programs, and process data from computer programs.

Optionally, the communication device 100 may also include one or more memory 1002, on which computer program 1004 may be stored, and the processor 1001 may execute the computer program 1004 to cause the communication device 1000 to execute the method described in the above method embodiments. Optionally, the memory 1002 may also store data. The communication device 100 and the memory 1002 may be set separately or integrated together.

Optionally, the communication device 100 may also include a transceiver 1005 and an antenna 1006. The transceiver 1005 can be referred to as a transceiver unit, transceiver, or transceiver circuit, etc., used to achieve transceiver functions. The transceiver 1005 may include a receiver and a transmitter, and the receiver can be referred to as a receiving machine or a receiving circuit, etc., for achieving reception functions; the transmitter can be referred to as a transmission machine or transmission circuit, etc., for achieving transmission functions.

Optionally, the communication device 100 may also include one or more interface circuits 1007. The interface circuit 1007 is configured to receive code instructions and transmit them to the processor 1001. The processor 1001 runs the code instructions to cause the communication device 100 to execute the method described in the above method embodiments.

The communication device 100 is the terminal. The processor 1001 is configured to execute S503 in Fig. 5; S602 in Fig. 6; S802 and S805 in Fig. 8. The transceiver 1005 is configured to execute step S401 in Fig. 4, steps S501 and S502 in Fig. 5; step S601 in Fig. 6; step S803 in Fig. 8.

The communication device 100 is the core network device. The processor is configured to execute step S701 in Fig. 7; step S804 in Fig. 8. The processor 1001 is configured to execute S801 in Fig. 8.

In one implementation, the processor 1001 may include a transceiver for implementing sending and receiving functions. For example, the transceiver may be a transceiver circuit, an interface, or an interface circuit. The transceiver circuits, interfaces, or interface circuits used to achieve receiving and sending functions can be separate or integrated together. The above-mentioned transceiver circuit, interface or interface circuit can be used for reading and writing code/data, or the aforementioned transceiver circuit, interface or interface circuit can be used for signal transmission or transfer.

In one implementation, the processor 1001 may store a computer program 1003, which runs on the processor 1001 and can cause the communication device 100 to execute the method described in the above method embodiments. The computer program 1003 may be embedded in the processor 1001, in which case the processor 1001 may be implemented by hardware.

In one implementation, the communication device 100 may include a circuit that can achieve the functions of sending, receiving, or communicating in the aforementioned method embodiments. The processor and transceiver described in this disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and transceiver can also be manufactured using various IC process technologies, such as complementary metal oxide semiconductor (CMOS), N-type metal oxide semiconductor (NMOS), P-type metal oxide semiconductor (PMOS), bipolar junction transistor (BJT) Bipolar CMOS (BiCMOS), silicon germanium (SiGe), gallium arsenide (GaAs), etc.

The communication device described in the above embodiments may be a terminal (such as the first-type terminal in the method embodiments described above) or a network device, but the scope of the communication device described in this application is not limited to this, and the structure of the communication device may not be limited by Fig. 17. The communication device may be an independent device or may be part of a larger device. For example, the communication device may be:
(1) independent integrated circuit IC, or chip, or chip system or subsystem;
(2) a set of one or more ICs, optionally including storage components for storing data and computer programs;
(3) ASIC, such as a modem;
(4) a module that can be embedded in other devices;
(5) a receiver, terminal, intelligent terminal, cellular phone, wireless device, handheld device, mobile unit, on-board device, cloud device, artificial intelligence device, etc;
(6) others and so on.

Those skilled in the art can also understand that the various illustrative logical blocks and steps listed in the embodiments of the present disclosure can be implemented through electronic hardware, computer software, or a combination of the two. Whether such functions are implemented through hardware or software depends on the specific application and design requirements of the whole system. Technicians in this field can use various methods to achieve the described functions for each specific application, but this implementation should not be understood as exceeding the scope of protection in the embodiments of this disclosure.

Embodiments of the present disclosure further provide a communication system. The system includes the communication device as the terminal and the communication device as the core network device in the aforementioned embodiment of Fig. 9, or the system includes a communication device as a terminal and a communication device as a core network device in the aforementioned embodiment of Fig. 10.

The present disclosure further provides a readable storage medium on which instructions are stored, which, when executed by a computer, implement the functions of any of the above method embodiments.

The present disclosure further provides a computer program product, which, when executed by a computer, implement the functions of any of the above method embodiments.

In the above embodiments, it can be fully or partially implemented through software, hardware, firmware, or any combination thereof. When implemented using software, it can be fully or partially implemented in the form of computer program products. The computer program product includes one or more computer programs. When loading and executing the computer program on the computer, all or part of the processes or functions described in the embodiments of the present disclosure are generated. The computer may be a general-purpose computer, a specialized computer, a computer network, or other programmable devices. The computer program can be stored in a computer-readable storage medium or transmitted from one computer-readable storage medium to another, for example, the computer program may be transmitted from a website, a computer, a server or a data center to another website site, computer, server, or data center through wired (such as coaxial cable, fiber optic, digital subscriber line (DSL)) or wireless (such as infrared, wireless, microwave, etc.) methods. The computer-readable storage medium may be any available medium that the computer can access, or a data storage device such as a server or data center that includes one or more available media integrations. The available media may be magnetic media (such as floppy disks, hard drives, magnetic tapes), optical media (such as high-density digital video discs (DVDs)), or semiconductor media (such as solid state disks (SSDs)), etc.

Ordinary technical personnel in this field can understand that the first, second, and other numerical numbers involved in this disclosure are only for the convenience of description and differentiation, and are not used to limit the scope of the embodiments of this disclosure, but also indicate the order.

"At least one" in the present disclosure may also be described as "one or more", and "multiple" may be two, three, four, or more, without limitation in this disclosure. In embodiments of the disclosure, for a kind of technical features, the technical features described in "first", "second", "third", "A", "B", "C", and "D" are distinguished, and there is no order or order of magnitude between the technical features described in "first", "second", "third", "A", "B", "C", and "D".

The corresponding relationships shown in each table in this disclosure can be configured or predefined. The values of the information in each table are only examples and can be configured to other values, which is not limited in the disclosure. When configuring the correspondence between information and various parameters, it is not necessary to configure all the correspondence shown in each table. For example, in the table of this disclosure, the corresponding relationships shown in certain rows may not be configured. For example, appropriate deformation adjustments can be made based on the above table, such as splitting, merging, etc. The names of the parameters shown in the titles of the above tables can also use other names that can be understood by the communication device, and the values or representations of their parameters can also be understood by other values or representations that can be understood by the communication device. When implementing the above tables, other data structures can also be used, such as arrays, queues, containers, stacks, linear tables, pointers, linked lists, trees, graphs, structures, classes, heaps, hash tables, or hash tables.

The term predefined in this disclosure can be understood as defined, defined in advance, stored, pre-stored, pre-negotiated, pre-configured, solidified, or pre-fired.

Ordinary technical personnel in this field may realize that the units and algorithm steps of each example described in conjunction with the disclosed embodiments can be implemented in electronic hardware, or a combination of computer software and electronic hardware. Whether these functions are executed in hardware or software depends on the specific application and design constraints of the technical solution. Professional technicians may use different methods to implement the described functions for each specific application, but such implementation should not be considered beyond the scope of this application.

Technicians in the art can clearly understand that for the convenience and conciseness of the description, the specific working processes of the system, device, and unit described above can refer to the corresponding processes in the aforementioned method embodiments, and will not be repeated here.

The above is only the specific implementation of this application, but the scope of protection of this application is not limited to this. Any technical personnel familiar with this technical field can easily think of changes or replacements within the scope of technology disclosed in this application, which should be covered within the scope of protection of this application. Therefore, the protection scope of this application should be based on the protection scope of the claims.

## Claims

1. A method for interaction between a terminal and a core network, applied in a discontinuous coverage scenario of an Internet of Things Non-Terrestrial Network, IoT-NTN, the method performed by a terminal, and comprising:
sending (S401, S501) discontinuous coverage information to a core network device;
the method being **characterized in that**:
sending discontinuous coverage information to the core network device comprises:
sending the discontinuous coverage information to the core network device through a tracking area update process.

2. The method of claim 1, further comprising:
receiving (S502) instruction information sent by the core network device based on the discontinuous coverage information; and
performing (S503) a corresponding operation according to the instruction information.

3. The method of claim 2, wherein the instruction information comprises any of:
instructing the terminal to ignore an extended discontinuous reception, eDRX, configuration parameter and/or a power save mode, PSM, configuration parameter;
instructing the terminal to stop using an eDRX mode and/or a PSM mode when entering a non-IoT-NTN network coverage, and to continue to perform according to an eDRX configuration and/or a PSM configuration when entering an IoT-NTN network coverage scenario; and
instructing the terminal to use a new eDRX configuration parameter and/or a new PSM configuration parameter.

4. The method of claim 3, wherein performing the corresponding operation according to the instruction information comprises:
instructing the terminal to ignore the eDRX configuration parameter and/or the PSM configuration parameter configured by the core network device when the terminal enters the discontinuous coverage scenario, according to the instruction information; or
instructing the terminal to ignore the eDRX configuration parameter and/or the PSM configuration parameter configured by the core network when entering the non-IoT-NTN network coverage, and to continue to perform the eDRX configuration and/or the PSM configuration when entering the IoT-NTN network coverage scenario, according to the instruction information; or
instructing the terminal to use a new eDRX configuration and/or a new PSM configuration configured by the core network, according to the instruction information.

5. The method of claim 1, wherein sending discontinuous coverage information to the core network device further comprises:
sending the discontinuous coverage information to the core network device through an attach process; or
sending the discontinuous coverage information to the core network device in response to receiving auxiliary information sent by a base station for the terminal to predict the discontinuous coverage scenario; or
sending the discontinuous coverage information to the core network device in case that the core network device configures an eDRX parameter and/or a PSM parameter for the terminal.

6. The method of any of claims 1-5, wherein the discontinuous coverage information comprises:
providing time information of IoT-NTN network coverage and/or of non-IoT-NTN network coverage for the terminal; and
the terminal entering a non-IoT-NTN network coverage scenario.

7. The method of claim 6, wherein providing time information of IoT-NTN network coverage and/or of non-IoT-NTN network coverage for the terminal comprises any of:
a time when the terminal enters non-IoT-NTN network coverage, and/or leaves the non-IoT-NTN network coverage;
a time when the terminal enters non-IoT-NTN network coverage, and/or returns to IoT-NTN network coverage;
a plurality of time periods, each time period comprising time when the terminal enters non-IoT-NTN network coverage, and/or leaves non-IoT-NTN network coverage, or each time period comprising time when the terminal enters non-IoT-NTN network coverage, and/or returns to IoT-NTN network coverage.

8. A method for interaction between a terminal and a core network, applied in a discontinuous coverage scenario of an Internet of Things Non-Terrestrial Network, IoT-NTN, the method being performed by a core network device, and comprising:
receiving discontinuous coverage information sent by the terminal;
the method being **characterized in that**:
receiving discontinuous coverage information sent by the terminal comprises:
receiving the discontinuous coverage information sent by the terminal through a tracking area update process.

9. The method of claim 8, further comprising:
sending (S701) instruction information to the terminal based on the discontinuous coverage information.

10. The method of claim 9, wherein the instruction information comprises:
instructing the terminal to ignore an extended discontinuous reception, eDRX, configuration parameter and/or a power save mode, PSM, configuration parameter;
instructing the terminal to stop using an eDRX mode and/or a PSM mode when entering a non-IoT-NTN network coverage, and to continue to perform according to an eDRX configuration and/or a PSM configuration when entering an IoT-NTN network coverage scenario; and
instructing the terminal to use a new eDRX configuration parameter and/or a new PSM configuration parameter.

11. The method of claim 10, further comprising:
determining that the terminal does not perform the eDRX configuration and/or the PSM configuration in non-IoT-NTN network coverage.

12. The method of claim 9, wherein sending the instruction information to the terminal comprises:
sending the instruction information to the terminal in a tracking area update accept message.

13. The method of any of claims 8 to 12,
wherein the discontinuous coverage information comprises:
providing time information of non-IoT-NTN network coverage for the terminal;
and
the terminal entering a non-IoT-NTN network coverage scenario;
wherein providing time information of non-IoT-NTN network coverage for the terminal comprises a time when the terminal enters non-IoT-NTN network coverage.

14. A terminal (100), comprising a processor (1001) and a memory (1002), the memory (1002) storing a computer program, and the processor (1001) being configured to execute the computer program stored in the memory (1002), to enable the terminal (100) to implement the method of any of claims 1-7.

15. A core network device (100), comprising a processor (1001) and a memory (1002), the memory (1002) storing a computer program, and the processor (1001) being configured to execute the computer program stored in the memory (1002), to enable the core network device (100) to implement the method of any of claims 8-13.

## Patentansprüche

1. Verfahren zur Interaktion zwischen einem Endgerät und einem Kernnetzwerk, angewandt in einem Szenario mit diskontinuierlicher Abdeckung eines Internet der Dinge-Nichtterrestrischen Netzes (IoT-NTN), wobei das Verfahren durch ein Endgerät durchgeführt wird und umfasst:
Senden (S401, S501) von Informationen über diskontinuierliche Abdeckung an eine Kernnetzwerkvorrichtung;
**dadurch gekennzeichnet, dass**:
das Senden von Informationen über diskontinuierliche Abdeckung an die Kernnetzwerkvorrichtung umfasst:
Senden der Informationen über diskontinuierliche Abdeckung an die Kernnetzwerkvorrichtung im Rahmen eines Tracking-Area-Update-Verfahrens.

2. Verfahren nach Anspruch 1, ferner umfassend:
Empfangen (S502) von Anweisungsinformationen, die von der Kernnetzwerkvorrichtung basierend auf den Informationen über diskontinuierliche Abdeckung gesendet werden; und
Durchführen (S503) einer entsprechenden Operation gemäß den Anweisungsinformationen.

3. Verfahren nach Anspruch 2, wobei die Anweisungsinformationen eines der Folgenden umfassen:
Anweisen des Endgeräts, einen erweiterten diskontinuierlichen Empfangs(eDRX)-Konfigurationsparameter und/oder einen Energiesparmodus(PSM)-Konfigurationsparameter zu ignorieren;
Anweisen des Endgeräts, die Verwendung eines eDRX-Modus und/oder eines PSM-Modus einzustellen, wenn es eine Nicht-IoT-NTN-Netzabdeckung betritt, und gemäß einer eDRX-Konfiguration und/oder einer PSM-Konfiguration fortzufahren, wenn es ein IoT-NTN-Netzabdeckungsszenario betritt; und
Anweisen des Endgeräts, einen neuen eDRX-Konfigurationsparameter und/oder einen neuen PSM-Konfigurationsparameter zu verwenden.

4. Verfahren nach Anspruch 3, wobei das Durchführen der entsprechenden Operation gemäß den Anweisungsinformationen umfasst:
Anweisen des Endgeräts, den eDRX-Konfigurationsparameter und/oder den PSM-Konfigurationsparameter, die von der Kernnetzwerkvorrichtung konfiguriert wurden, zu ignorieren, wenn das Endgerät das Szenario mit diskontinuierlicher Abdeckung betritt, gemäß den Anweisungsinformationen; oder
Anweisen des Endgeräts, den eDRX-Konfigurationsparameter und/oder den PSM-Konfigurationsparameter, die vom Kernnetzwerk konfiguriert wurden, zu ignorieren, wenn es die Nicht-IoT-NTN-Netzabdeckung betritt, und gemäß der eDRX-Konfiguration und/oder der PSM-Konfiguration fortzufahren, wenn es das IoT-NTN-Netzabdeckungsszenario betritt, gemäß den Anweisungsinformationen; oder
Anweisen des Endgeräts, eine neue eDRX-Konfiguration und/oder eine neue PSM-Konfiguration, die vom Kernnetzwerk konfiguriert wurden, zu verwenden, gemäß den Anweisungsinformationen.

5. Verfahren nach Anspruch 1, wobei das Senden von Informationen über diskontinuierliche Abdeckung an die Kernnetzwerkvorrichtung ferner umfasst:
Senden der Informationen über diskontinuierliche Abdeckung an die Kernnetzwerkvorrichtung im Rahmen eines Attach-Verfahrens; oder
Senden der Informationen über diskontinuierliche Abdeckung an die Kernnetzwerkvorrichtung als Antwort auf den Empfang von Hilfsinformationen, die von einer Basisstation gesendet wurden, damit das Endgerät das Szenario mit diskontinuierlicher Abdeckung vorhersagen kann; oder
Senden der Informationen über diskontinuierliche Abdeckung an die Kernnetzwerkvorrichtung, falls die Kernnetzwerkvorrichtung einen eDRX-Parameter und/oder einen PSM-Parameter für das Endgerät konfiguriert.

6. Verfahren nach einem der Ansprüche 1-5, wobei die Informationen über diskontinuierliche Abdeckung umfassen:
Bereitstellen von Zeitinformationen über IoT-NTN-Netzabdeckung und/oder über Nicht-IoT-NTN-Netzabdeckung für das Endgerät; und
das Endgerät ein Nicht-IoT-NTN-Netzabdeckungsszenario betritt.

7. Verfahren nach Anspruch 6, wobei das Bereitstellen von Zeitinformationen über IoT-NTN-Netzabdeckung und/oder über Nicht-IoT-NTN-Netzabdeckung für das Endgerät eines der Folgenden umfasst:
einen Zeitpunkt, zu dem das Endgerät die Nicht-IoT-NTN-Netzabdeckung betritt und/oder verlässt;
einen Zeitpunkt, zu dem das Endgerät die Nicht-IoT-NTN-Netzabdeckung betritt und/oder zur IoT-NTN-Netzabdeckung zurückkehrt;
mehrere Zeitperioden, wobei jede Zeitperiode den Zeitpunkt umfasst, zu dem das Endgerät die Nicht-IoT-NTN-Netzabdeckung betritt und/oder verlässt, oder wobei jede Zeitperiode den Zeitpunkt umfasst, zu dem das Endgerät die Nicht-IoT-NTN-Netzabdeckung betritt und/oder zur IoT-NTN-Netzabdeckung zurückkehrt.

8. Verfahren zur Interaktion zwischen einem Endgerät und einem Kernnetzwerk, angewandt in einem Szenario mit diskontinuierlicher Abdeckung eines Internet der Dinge-Nichtterrestrischen Netzes (IoT-NTN), wobei das Verfahren durch eine Kernnetzwerkvorrichtung durchgeführt wird und umfasst:
Empfangen von Informationen über diskontinuierliche Abdeckung, die vom Endgerät gesendet wurden;
**dadurch gekennzeichnet, dass**:
das Empfangen von Informationen über diskontinuierliche Abdeckung, die vom Endgerät gesendet wurden, umfasst:
Empfangen der Informationen über diskontinuierliche Abdeckung, die vom Endgerät im Rahmen eines Tracking-Area-Update-Verfahrens gesendet wurden.

9. Verfahren nach Anspruch 8, ferner umfassend:
Senden (S701) von Anweisungsinformationen an das Endgerät basierend auf den Informationen über diskontinuierliche Abdeckung.

10. Verfahren nach Anspruch 9, wobei die Anweisungsinformationen umfassen:
Anweisen des Endgeräts, einen erweiterten diskontinuierlichen Empfangs(eDRX)-Konfigurationsparameter und/oder einen Energiesparmodus(PSM)-Konfigurationsparameter zu ignorieren;
Anweisen des Endgeräts, die Verwendung eines eDRX-Modus und/oder eines PSM-Modus einzustellen, wenn es eine Nicht-IoT-NTN-Netzabdeckung betritt, und gemäß einer eDRX-Konfiguration und/oder einer PSM-Konfiguration fortzufahren, wenn es ein IoT-NTN-Netzabdeckungsszenario betritt; und
Anweisen des Endgeräts, einen neuen eDRX-Konfigurationsparameter und/oder einen neuen PSM-Konfigurationsparameter zu verwenden.

11. Verfahren nach Anspruch 10, ferner umfassend:
Feststellen, dass das Endgerät die eDRX-Konfiguration und/oder die PSM-Konfiguration in der Nicht-IoT-NTN-Netzabdeckung nicht durchführt.

12. Verfahren nach Anspruch 9, wobei das Senden der Anweisungsinformationen an das Endgerät umfasst:
Senden der Anweisungsinformationen an das Endgerät in einer Tracking-Area-Update-Accept-Nachricht.

13. Verfahren nach einem der Ansprüche 8 bis 12, wobei die Informationen über diskontinuierliche Abdeckung umfassen:
Bereitstellen von Zeitinformationen über Nicht-IoT-NTN-Netzabdeckung für das Endgerät;
und
das Endgerät ein Nicht-IoT-NTN-Netzabdeckungsszenario betritt;
wobei das Bereitstellen von Zeitinformationen über Nicht-IoT-NTN-Netzabdeckung für das Endgerät einen Zeitpunkt umfasst, zu dem das Endgerät die Nicht-IoT-NTN-Netzabdeckung betritt.

14. Endgerät (100), umfassend einen Prozessor (1001) und einen Speicher (1002), wobei der Speicher (1002) ein Computerprogramm speichert und der Prozessor (1001) konfiguriert ist, das im Speicher (1002) gespeicherte Computerprogramm auszuführen, um das Endgerät (100) zu befähigen, das Verfahren nach einem der Ansprüche 1-7 durchzuführen.

15. Kernnetzwerkvorrichtung (100), umfassend einen Prozessor (1001) und einen Speicher (1002), wobei der Speicher (1002) ein Computerprogramm speichert und der Prozessor (1001) konfiguriert ist, das im Speicher (1002) gespeicherte Computerprogramm auszuführen, um die Kernnetzwerkvorrichtung (100) zu befähigen, das Verfahren nach einem der Ansprüche 8-13 durchzuführen.

## Revendications

1. Procédé d'interaction entre un terminal et un réseau cœur, appliqué dans un scénario de couverture discontinue d'un réseau non terrestre pour l'Internet des Objets (IoT-NTN), le procédé étant exécuté par un terminal et comprenant :
l'envoi (S401, S501) d'informations de couverture discontinue à un dispositif de réseau cœur ;
**caractérisé en ce que** :
l'envoi d'informations de couverture discontinue au dispositif de réseau cœur comprend :
l'envoi des informations de couverture discontinue au dispositif de réseau cœur via un processus de mise à jour de zone de suivi.

2. Procédé selon la revendication 1, comprenant en outre :
la réception (S502) d'informations d'instruction envoyées par le dispositif de réseau cœur sur la base des informations de couverture discontinue ; et
l'exécution (S503) d'une opération correspondante selon les informations d'instruction.

3. Procédé selon la revendication 2, dans lequel les informations d'instruction comprennent l'une quelconque des instructions suivantes :
ordonner au terminal d'ignorer un paramètre de configuration de réception discontinue étendue (eDRX) et/ou un paramètre de configuration de mode d'économie d'énergie (PSM) ;
ordonner au terminal d'arrêter d'utiliser un mode eDRX et/ou un mode PSM lors de l'entrée dans une couverture de réseau non-IoT-NTN, et de continuer à fonctionner selon une configuration eDRX et/ou une configuration PSM lors de l'entrée dans un scénario de couverture de réseau IoT-NTN ; et
ordonner au terminal d'utiliser un nouveau paramètre de configuration eDRX et/ou un nouveau paramètre de configuration PSM.

4. Procédé selon la revendication 3, dans lequel l'exécution de l'opération correspondante selon les informations d'instruction comprend :
ordonner au terminal d'ignorer le paramètre de configuration eDRX et/ou le paramètre de configuration PSM configurés par le dispositif de réseau cœur lorsque le terminal entre dans le scénario de couverture discontinue, selon les informations d'instruction ; ou
ordonner au terminal d'ignorer le paramètre de configuration eDRX et/ou le paramètre de configuration PSM configurés par le réseau cœur lors de l'entrée dans la couverture de réseau non-IoT-NTN, et de continuer à fonctionner selon la configuration eDRX et/ou la configuration PSM lors de l'entrée dans le scénario de couverture de réseau IoT-NTN, selon les informations d'instruction ; ou
ordonner au terminal d'utiliser une nouvelle configuration eDRX et/ou une nouvelle configuration PSM configurées par le réseau cœur, selon les informations d'instruction.

5. Procédé selon la revendication 1, dans lequel l'envoi d'informations de couverture discontinue au dispositif de réseau cœur comprend en outre :
l'envoi des informations de couverture discontinue au dispositif de réseau cœur via un processus de rattachement ; ou
l'envoi des informations de couverture discontinue au dispositif de réseau cœur en réponse à la réception d'informations auxiliaires envoyées par une station de base pour que le terminal prédise le scénario de couverture discontinue ; ou
l'envoi des informations de couverture discontinue au dispositif de réseau cœur dans le cas où le dispositif de réseau cœur configure un paramètre eDRX et/ou un paramètre PSM pour le terminal.

6. Procédé selon l'une quelconque des revendications 1 à 5, dans lequel les informations de couverture discontinue comprennent :
la fourniture d'informations temporelles sur la couverture du réseau IoT-NTN et/ou sur la couverture du réseau non-IoT-NTN pour le terminal ; le terminal entrant dans un scénario de couverture de réseau non-IoT-NTN.

7. Procédé selon la revendication 6, dans lequel la fourniture d'informations temporelles sur la couverture du réseau IoT-NTN et/ou sur la couverture du réseau non-IoT-NTN pour le terminal comprend l'une quelconque des informations suivantes :
un moment où le terminal entre dans la couverture du réseau non-IoT-NTN et/ou quitte la couverture du réseau non-IoT-NTN ;
un moment où le terminal entre dans la couverture du réseau non-IoT-NTN et/ou retourne à la couverture du réseau IoT-NTN ;
une pluralité de périodes temporelles, chaque période temporelle comprenant le moment où le terminal entre dans la couverture du réseau non-IoT-NTN et/ou quitte la couverture du réseau non-IoT-NTN, ou chaque période temporelle comprenant le moment où le terminal entre dans la couverture du réseau non-IoT-NTN et/ou retourne à la couverture du réseau IoT-NTN.

8. Procédé d'interaction entre un terminal et un dispositif de réseau cœur, appliqué dans un scénario de couverture discontinue d'un réseau non terrestre pour l'Internet des Objets (IoT-NTN), le procédé étant exécuté par un dispositif de réseau cœur et comprenant :
la réception d'informations de couverture discontinue envoyées par le terminal ;
**caractérisé en ce que** :
la réception d'informations de couverture discontinue envoyées par le terminal comprend :
la réception des informations de couverture discontinue envoyées par le terminal via un processus de mise à jour de zone de suivi.

9. Procédé selon la revendication 8, comprenant en outre :
l'envoi (S701) d'informations d'instruction au terminal sur la base des informations de couverture discontinue.

10. Procédé selon la revendication 9, dans lequel les informations d'instruction comprennent :
ordonner au terminal d'ignorer un paramètre de configuration de réception discontinue étendue (eDRX) et/ou un paramètre de configuration de mode d'économie d'énergie (PSM) ;
ordonner au terminal d'arrêter d'utiliser un mode eDRX et/ou un mode PSM lors de l'entrée dans une couverture de réseau non-IoT-NTN, et de continuer à fonctionner selon une configuration eDRX et/ou une configuration PSM lors de l'entrée dans un scénario de couverture de réseau IoT-NTN ; et
ordonner au terminal d'utiliser un nouveau paramètre de configuration eDRX et/ou un nouveau paramètre de configuration PSM.

11. Procédé selon la revendication 10, comprenant en outre :
la détermination que le terminal n'exécute pas la configuration eDRX et/ou la configuration PSM dans la couverture de réseau non-IoT-NTN.

12. Procédé selon la revendication 9, dans lequel l'envoi des informations d'instruction au terminal comprend :
l'envoi des informations d'instruction au terminal dans un message d'acceptation de mise à jour de zone de suivi.

13. Procédé selon l'une quelconque des revendications 8 à 12, dans lequel les informations de couverture discontinue comprennent :
la fourniture d'informations temporelles sur la couverture du réseau non-IoT-NTN pour le terminal ;
et
le terminal entrant dans un scénario de couverture de réseau non-IoT-NTN ;
dans lequel la fourniture d'informations temporelles sur la couverture du réseau non-IoT-NTN pour le terminal comprend un moment où le terminal entre dans la couverture du réseau non-IoT-NTN.

14. Terminal (100) comprenant un processeur (1001) et une mémoire (1002), la mémoire (1002) stockant un programme informatique, et le processeur (1001) étant configuré pour exécuter le programme informatique stocké dans la mémoire (1002), afin de permettre au terminal (100) de mettre en œuvre le procédé selon l'une quelconque des revendications 1 à 7.

15. Dispositif de réseau cœur (100) comprenant un processeur (1001) et une mémoire (1002), la mémoire (1002) stockant un programme informatique, et le processeur (1001) étant configuré pour exécuter le programme informatique stocké dans la mémoire (1002), afin de permettre au dispositif de réseau cœur (100) de mettre en œuvre le procédé selon l'une quelconque des revendications 8 à 13.
